# EUROPEAN PATENT APPLICATION

(11) **EP 4 737 613 A1**
(43) Date of publication of application: **06.05.2026**
(21) Application number: 25212318.7
(22) Date of filing: 30.10.2025
(51) Int. Cl.: C25B 1/04, C25B 11/097, C25B 11/053, C25B 11/061

(54) **WATER ELECTROLYSIS ELECTRODE, MANUFACTURING METHOD OF WATER ELECTROLYSIS ELECTRODE, WATER ELECTROLYSIS DEVICE, AND USE OF WATER ELECTROLYSIS ELECTRODE**

(30) Priority: 30.10.2024 KR 20240150920
(71) Applicant: SK Innovation Co., Ltd., Seoul 03188 (KR)
(72) Inventor: LIM, Yun Ji, 34124 Daejeon (KR); HAN, Hyun Su, 34124 Daejeon (KR); SEOK, Tae Hong, 34124 Daejeon (KR); LEE, Tae Kyoung, 34124 Daejeon (KR)
(74) Representative: Prüfer & Partner mbB Patentanwälte · Rechtsanwälte

(57) **Abstract**

The present disclosure relates to a water electrolysis electrode, manufacturing method of the water electrolysis electrode, and water electrolysis device, in an embodiment, the water electrolysis electrode may comprise a metal layer and a catalyst layer formed on the metal layer, wherein the catalyst layer may include silver, iridium and ruthenium. The present disclosure further relates to a use of a water electrolysis electrode or a water electrolysis device, for water electrolysis, and to a use of a water electrolysis electrode which is included in a water electrolysis device.

## Description

### BACKGROUND OF THE INVENTION

### 1. Field

The present disclosure relates to a water electrolysis electrode, a method of manufacturing a water electrolysis electrode, a water electrolysis device, and a use of a water electrolysis electrode.

### 2. Description of the Related Art

Hydrogen energy is a clean energy and is attracting attention as one of the promising alternative energies to solve energy problems in the long term. Among hydrogen production methods, the water electrolysis method, which uses electric energy to separate water into hydrogen and oxygen, i.e., does not emit carbon dioxide, has attracted much attention because it is environmentally friendly and can contribute significantly to achieving carbon neutrality.

The water electrolysis reaction includes the Oxygen Generating reaction (also referred to as "Oxygen Evolution Reaction") (OER), which occurs at the oxygen generating (evolution) electrode of the water electrolysis system, and the Hydrogen Generating reaction (also referred to as "Hydrogen Evolution Reaction") (HER), which occurs at the hydrogen generating (evolution) electrode, and the half-cell reaction and full-cell reaction in acidic and alkaline media, respectively, can be represented as shown in the following Reactions 1 and 2.

[Reaction 1] (in acidic media) Oxygen generating reaction: 2H₂O(l)→ O₂(g) + 4H⁺ + 4e⁻ Hydrogen generating reaction: 4H⁺ + 4e⁻→ 2H₂(g) Overall reaction: H₂O(l)→ H₂(g) + 1/2O₂ (g)

[Reaction 2] (in alkaline media) Oxygen generating reaction: 2OH⁻→ 1/2O₂(g) + H₂O(l) + 2e⁻ Hydrogen generating reaction: 2H₂O(l) + 2e⁻→H₂(g) + 2OH⁻ Overall reaction: H₂O(l)→ H₂(g) + 1/2O₂(g)

On the other hand, due to the slower reaction rate of the oxygen generating reaction than the hydrogen generating reaction in the water electrolysis reaction, an overpotential higher than the theoretical oxygen generating reaction voltage can be generated, so in order to reduce the reaction overpotential and improve the oxygen generating performance and efficiency, catalysts for precious metal electrodes such as platinum and iridium and electrodes applied to them are mainly used. However, the application of precious metal-based catalysts is associated with high costs and difficulty in controlling supply and demand.

Therefore, there is a need to develop a water electrolysis electrode, specifically an oxygen generating electrode, that can replace precious metal-based catalysts or reduce the precious metal content, while at the same time having an improved oxygen generating reaction performance.

Thus, according to an aspect of the present disclosure, a water electrolysis electrode having a comparably low precious metal loading and at the same time an excellent oxygen generating reaction performance and a water electrolysis device including the same is provided.

According to another aspect of the present disclosure, a method for manufacturing a water electrolysis electrode capable of efficiently manufacturing a water electrolysis electrode is provided.

According to another aspect of the present disclosure, a use of a water electrolysis electrode as disclosed herein for water electrolysis is provided.

According to another aspect of the present disclosure, a use of a water electrolysis electrode that is included in a water electrolysis device, is provided.

Meanwhile, the present disclosure can be widely applied to electric vehicles, battery charging stations, energy storage systems (ESS), and other green technology fields such as photovoltaics and wind power using battery cells. In addition, the electrode assembly according to the present disclosure and the battery cell including the same can be used for eco-friendly mobility and the like including electric vehicles and hybrid vehicles for preventing climate change by suppressing air pollution and greenhouse fluid emission.

### SUMMARY OF THE INVENTION

The present disclosure refers to the following:
A water electrolysis electrode according to an embodiment of the present disclosure comprises: a metal layer; and a catalyst layer formed on the metal layer, wherein the catalyst layer includes silver, iridium and ruthenium.

In an embodiment, the metal layer may include one or more selected from the group consisting of a metal mesh, a metal foam, a metal foil, a metal felt, and a metal fiber. In an embodiment, the metal layer includes, or is, a metal mesh or a metal felt. In a preferred embodiment, the metal layer is a metal felt. In a further preferred embodiment if the metal layer comprises or is titanium, the metal layer is a metal felt.

In an embodiment, the metal layer may include one or more metal selected from the group consisting of titanium, nickel, and stainless steel, or an alloy thereof.

In an embodiment, the metal layer may include a titanium felt.

In an embodiment, at least some of the silver, iridium and ruthenium included in the catalyst layer may be electrically interact with each other.

In an embodiment, the catalyst layer may include: a first layer including the silver and in contact with the metal layer; and a second layer including the iridium and ruthenium and formed on the first layer.

In an embodiment, the silver included in the first layer may be chemically bonded with a metal of the metal layer. In an embodiment, the chemical bond comprises, optionally is, a metallic bonding.

In an embodiment, the water electrolysis electrode may not comprise a binder. Optionally, the water electrolysis electrode may not comprise one or more binder substance(s) selected from the group consisting of polymeric binder such as Nafion, polyvinylidene fluoride, polyacrylonitrile, carboxymethylcellulose, or a rubber binder.

In an embodiment, the water electrolysis electrode may comprise: the iridium and ruthenium in a weight ratio of 9:1 to 5:5.

In an embodiment, the iridium may be included in 0.3wt% to 0.5wt% based on the total weight of the water electrolysis electrode.

In an embodiment, the ruthenium may be included in 0.05wt% to 0.5wt% based on the total weight of the water electrolysis electrode.

A method for manufacturing a water electrolysis electrode according to another embodiment of the present disclosure comprises: a step of forming a catalyst layer on a metal substrate; wherein the catalyst layer may include silver, iridium, and ruthenium.

In another embodiment, the metal substrate may include one or more selected from the group consisting of a metal mesh, a metal foam, a metal foil, a metal felt, and a metal fiber.

In another embodiment, the metal substrate may include one or more metal selected from the group consisting of titanium, nickel, and stainless steel, or an alloy thereof.

In another embodiment, the step of forming the catalyst layer on the metal substrate includes: a step of contacting the metal substrate with a first precursor solution containing silver ions and obtaining a metal substrate having a first layer including silver formed thereon, and a step of contacting the metal substrate having the first layer formed thereon with a second precursor solution containing iridium ions and ruthenium ions and forming a second layer including iridium and ruthenium on the first layer.

In another embodiment, the step of obtaining the metal substrate having the first layer may include a step of heat-treating the metal substrate having the first layer.

In another embodiment, the step of forming the second layer may include a step of heat-treating the metal substrate having the second layer.

In another embodiment, the method may further comprise: a step of acid-treating the metal substrate before the step of forming the catalyst layer on the metal substrate.

In another embodiment, the second precursor solution may contain iridium ions and ruthenium ions in a molarity ratio of 9:1 to 5:5.

A water electrolysis device according to another embodiment of the present disclosure comprises: an anode; a cathode; and a membrane positioned between the anode and the cathode, wherein the anode may include a metal layer and a catalyst layer formed on the metal layer, the catalyst layer includes silver, iridium, and ruthenium.

According to one aspect of the present disclosure, a water electrolysis electrode having a comparably low precious metal loading and improved, preferably excellent, oxygen generating reaction performance and a water electrolysis device including the same can be provided.

According to another aspect of the present disclosure, a method for manufacturing a water electrolysis electrode capable of efficiently manufacturing a water electrolysis electrode can be provided.

According to another aspect of the present disclosure, a use of the water electrolysis electrode or a water electrolysis device as disclosed in the present disclosure can be provided for water electrolysis.
According to another aspect of the present disclosure, a use of the water electrolysis electrode can be provided, wherein the water electrolysis electrode is included in a water electrolysis device.

### BRIEF DESCRIPTION OF THE DRAWINGS

FIG. 1 is a diagram illustrating an example cross-sectional view of a water electrolysis electrode according to one embodiment of the present disclosure.
FIG. 2 is a diagram illustrating another example of a cross-sectional view of a water electrolysis electrode according to one embodiment of the present disclosure.
FIG. 3 is a flowchart illustrating an example method of manufacturing a water electrolysis electrode according to one embodiment of the present disclosure.
FIG. 4 is an SEM/EDS mapping image of an electrode of Example 1.
FIG. 5 is a graph showing XRD patterns of the Example 1, Comparative Examples 2 and 3.
FIG. 6 is a graph showing the XPS analysis results of the Example 1 and Comparative Example 1.
FIG. 7 is a graph showing the XPS analysis results of the Example 1 and Comparative Example 1.
FIG. 8 is a graph comparing the supporting amount of iridium and ruthenium in the catalyst layer of the Example 1 and Comparative Example 4 by ICP mass spectrometry.
FIG. 9 is a diagram illustrating an example of a three-electrode system configured for evaluating electrochemical properties.
FIG. 10 is a graph showing a current density vs. voltage curve evaluating the oxygen generating performance of each of the electrodes of Examples 1 and 2 and Comparative Examples 1 to 4.
FIG. 11 is a graph showing a current density vs. voltage curve evaluating the oxygen generating performance of the Example 1 on a cycle-by-cycle.

### DETAILED DESCRIPTION

Hereinafter, referring to the accompanying drawings, embodiments of the present disclosure are described in detail so that those skilled in the art to which the present disclosure pertains can easily practice them. However, the present disclosure may be implemented in a number of different forms and is not limited to the embodiments described herein. Further, in order to clearly explain the present disclosure in the drawings, parts that are not related to the explanation are omitted, and similar parts are given similar reference numerals throughout the specification.

Further, throughout the specification, references to "including," "comprising," "containing," or "having" any component are not intended to exclude other components, but rather to indicate that other components may be further included, and are not intended to exclude elements, materials, or processes not further enumerated.

As used herein, equal or uniform may mean equal or uniform to each other within acceptable tolerances unless otherwise specified. For example, when a composition or property measure is identical, it may mean that the two objects being compared are not only exactly the same, but are identical within a margin of error. On the other hand, having the same physical property measurements may mean that the difference in the measurements between the objects is approximately less than 5%, more specifically less than 3%, and more specifically less than 1%.

As used herein, a numerical range includes lower and upper limits and all values within the range, increments logically derived from the shape and width of the range being defined, all values that are doubly bounded, and all possible combinations of upper and lower limits of numerical ranges bounded by different shapes.

Unless otherwise defined herein, "about" may be considered to be a value within 30%, 25%, 20%, 15%, 10%, or 5% of the stated value.

The use of the terms "first," "second," "third," "fourth," and the like before any component in this specification is intended to avoid confusion as to the component to which it refers, and is not intended to indicate any order, importance, or master-servant relationship among the components. For example, it is possible to practice an invention comprising only the second component without the first component.

As used herein, the term "contacting" or "in contact with" may refer to direct physical or chemical contact of one object with another object, and may also refer, without limitation, to contacting one object with another object through the medium of another object. It is preferred, but not necessarily limited, that the contact of one object with another object can cause a physical or chemical interaction between them.

As used herein, the term "salt" can mean, without limitation, any ionic form of a compound or chemical structure, including cationic or anionic compounds, to form an electrically neutral compound or structure.

As used herein, the term "water electrolysis" can mean, without limitation, a reaction or series of reactions that utilizes electrical energy to decompose water (H₂O) into gaseous hydrogen (H₂) and oxygen (O₂).

As used herein, the term "metal mesh" can mean a network of interconnected metal wires or strands that are woven or welded together to form a mesh-like structure.

As used herein, the term "metal foam" can mean a porous, cellular structure made of metal, that is characterized by a comparably large surface area to volume ratio. The cellular structure can be an open-cell or closed-cell structure.

As used herein, the term "metal foil" can mean a comparably thin sheet of metal. It is characterized by a comparably large surface area to volume ratio.

As used herein, the term "metal felt" can mean a non-woven aggregation of metal fibers that interlock in a random manner and that create a porous, sponge-like material, and preferably do not exhibit a uniform weave pattern. Metal felts as used herein have a comparably high specific surface area.

As used herein, the term "metal fiber"" can mean a fine, thread-like piece of metal that is characterized by its comparably high length-to-diameter ratio. Metal fibres as used herein exhibit a comparably high surface area.

In the following, the present disclosure will be described in detail. However, this is by way of example only and does not limit the present disclosure to the specific embodiments illustrated.

### Water electrolysis electrode

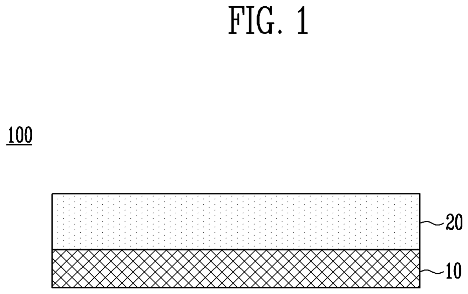

FIG. 1 is a diagram illustrating an example cross-sectional view of a water electrolysis electrode according to one embodiment of the present disclosure.

Referring to FIG. 1, a water electrolysis electrode 100 according to one embodiment of the present disclosure includes a metal layer 10; and a catalyst layer 20 formed on the metal layer 10, wherein the catalyst layer 20 may include silver (Ag), iridium (Ir), and ruthenium (Ru).

In one embodiment, the metal layer 10 may function as a substrate, support or material on which the catalytic metal is deposited. The catalytic metal can be deposited on a part of the metal layer 10, or on the whole metal layer 10.

In one embodiment, the metal layer 10 may include one or more selected from the group consisting of a metal mesh, a metal foam, a metal foil, a metal felt, and a metal fiber.

In one embodiment, the metal layer 10 may include one or more selected from the group consisting of titanium, nickel, and stainless steel, or an alloy thereof.

In one embodiment, the metal layer 10 may include a titanium mesh or titanium felt. In a specific embodiment, the metal layer 10 may include a titanium felt. In the case of the titanium felt, it has a higher mechanical strength compared to other forms of titanium-containing materials, which can further improve the mechanical stability of the electrolysis electrode.

However, depending on the need, the metal layer 10 may include a titanium mesh or a titanium felt, or may non-limitingly include other configurations without including the titanium mesh or the titanium felt.

In one embodiment, the catalyst layer 20 may be formed on the metal layer 10.

In one embodiment, the catalyst layer 20 may be formed to be deposited on at least a portion of the metal layer 10.

In one embodiment, if the metal layer 10 is a substrate having one or more faces, the catalyst layer 20 may be formed on at least a portion of one or more of the faces of the metal layer 10. In other words, it is not necessary that the catalyst layer 20 is formed on the whole metal layer 10. In such an embodiment, only a part of the metal layer is covered with the catalyst layer 20, and the catalyst layer 20 is formed on a part of the metal layer 10.

In one embodiment, the catalyst layer 20 may include silver, iridium, and ruthenium.

In one embodiment, silver may have good electrical conductivity (about 63× 10⁶ S/m). In embodiments, silver can function as a carrier or support for iridium and ruthenium, as will be described later.

In one embodiment, iridium and ruthenium can provide active sites for a water electrolysis reaction, more specifically, an oxygen generating reaction in the context of the present disclosure). Exemplarily, iridium and ruthenium can function as catalysts for the oxygen generating reaction, thereby reducing the reaction overpotential of the oxygen generating reaction.

Silver has good electrical conductivity, as described above, and can also function as a catalyst for the oxygen generating reaction. However, due to its weak oxygen generating reaction activity, it is difficult to expect excellent oxygen generating performance of the electrolysis electrode when used alone.

The iridium can exhibit excellent oxygen generating reaction activity when applied to catalysts for water electrolysis electrodes. On the other hand, when iridium is applied to a catalyst for a water electrolysis electrode in combination with silver, the electronic structure of iridium can be controlled by mutual interaction, providing a reaction active point, and excellent oxygen generating performance can be expected. However, due to its scarcity, iridium can reduce the economic efficiency of the electrolysis electrode when used in large quantities.

Ruthenium can exhibit excellent oxygen generating reaction activity when applied to catalysts for water electrolysis electrodes, and its scarcity is not high compared to iridium, which can be superior in terms of economy. However, ruthenium has poor durability under polymer electrolyte membrane (PEM) conditions, which may result in inferior durability of the water electrolysis device when used alone.

By including silver, iridium, and ruthenium as catalysts for the water electrolysis electrode according to the present disclosure, the water electrolysis electrode can exhibit excellent oxygen generating reaction activity while further reducing the amount of iridium loading by replacing a portion of iridium with ruthenium, and furthermore, the introduction of ruthenium can cause further electronic structure changes in iridium to provide an Ir-Ru reaction active point with even better oxygen generating reaction activity, thereby achieving significantly better oxygen generating performance.

In one embodiment, at least some of the iridium and ruthenium in the water electrolysis electrode according to the present disclosure may be supported on silver. In an exemplary embodiment, Ir and Ru may be supported in an amount of 0.1 to 15% based on the content of Ag. Within this range, the individual support amounts of Ir and Ru may not be limited. In an exemplary embodiment, the amount may be assessed by inductively coupled plasma (ICP) analysis, but is not necessarily limited thereto. The term "supported" means that at least some of the iridium and ruthenium (i.e. a proportion or part of iridium and/or ruthenium, respectively; and/or only iridium or ruthenium) in the water electrolysis electrode is in adhesion contact with the silver.

In one embodiment, the silver, iridium, and ruthenium in the catalyst layer 20 may be uniformly distributed. In such an embodiment, each of silver, iridium, and ruthenium in the catalyst layer 20 may not have a localized distribution in any region of the catalyst layer 20.

In one embodiment, at least some of the silver, iridium, and ruthenium in the catalyst layer 20 may electrically interact with each other.

In embodiments, at least some of the silver, iridium, and ruthenium in the catalyst layer 20 may electrically interact with each other, thereby altering the electronic structure of at least some of the silver, iridium, and/or ruthenium. Generally, the term "at least some of " may mean that one, two or all three of the elements silver, iridium and/or ruthenium is/are altered in its or their electronic structure; and/or it may mean that a proportion or a part of the one or more of the elements silver, iridium and/or ruthenium are respectively altered in its or their electronic structure. In specific embodiments, the electronic structure of at least a part of the iridium, optionally also at least a part of silver, may be altered as a result of the interactions. A change or alteration of the electronic structure may be determined by using X-ray photoelectron spectroscopy (XPS) analysis; a change or alteration in electronic structure may then be observed by a shift of a main peak in the binding energy (eV) graph obtained, when assessing for instance core-level photoelectrons from the 4f orbital for iridium (Ir4f) and/or core-level photoelectrons from the 3d orbital for silver (Ag3d). By such a change in electronic structure, the oxygen generating reaction activity in the catalyst layer 20 may be further improved, resulting in a further improvement in the oxygen generating performance of the water electrolysis electrode 100.

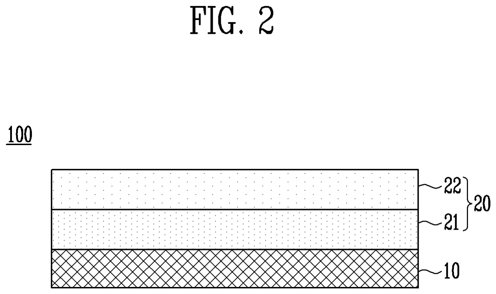

FIG. 2 is a diagram illustrating another example of a cross-sectional view of a water electrolysis electrode according to one embodiment of the present disclosure.

Referring to FIG. 2, in one embodiment, the catalyst layer 20 may include a first layer 21 including silver and being in contact with the metal layer; and a second layer 22 including iridium and ruthenium and formed on the first layer 21 which includes silver.

In one embodiment, the silver, iridium and ruthenium included in the catalyst layer 20 may form a layered structure. In one embodiment, this layered structure can be deposited on a part of the metal layer, or on the whole metal layer. In an embodiment, as described above, the catalyst layer 20 may have a layered structure of a first layer 21 including silver and a second layer 22 including iridium and ruthenium. In an exemplary embodiment, distinction between the first layer 21 and the second layer 22 may be evaluated using SEM-EDS analysis. For instance, analysis may be carried out via a cross-sectional observation method, or alternatively, by overlaying SEM-EDS images of Ag, Ir, and Ru obtained in the upward direction, it may be confirmed that Ir and Ru are aggregated and protrude at positions slightly offset from Ag, thereby enabling the layers to be distinguished.

Since silver has a high surface energy which typically is in the range of from 1 to 1.5 J/m², it may be difficult to produce trimetallic nanoparticles with a homogeneous mixture of iridium and ruthenium. By forming a layered structure as described above, that is, a layered structure of a first layer 21 including silver and a second layer 22 including iridium and ruthenium, a catalyst layer 20 that is uniformly supported with iridium and ruthenium can be easily formed. In this embodiment, the catalyst layer 20 comprises a first layer 21 including silver wherein this first layer is deposited on at least a part, or all, of the metal layer 10, and a second layer 22 including iridium and ruthenium in homogeneous mixture which is deposited on the first layer 21.

In one embodiment, at least some of the silver included in the first layer 21 may be chemically bonded to the metal of the metal layer 10. In such an embodiment, the water electrolysis electrode 100 may form a layered structure with the first layer 21 and the second layer 22 formed one after the other on the metal layer 10.

In one embodiment, at least some of the silver included in the first layer 21 may interact electrically and chemically by chemically bonding with the metal of the metal layer 10, and may further be strongly bonded to the metal layer 10. Accordingly, the electron transfer performance and durability of the water electrolysis electrode 100 may be improved.

In one embodiment, the first layer 21 may be deposited on the metal layer 10 with a uniform thickness. In one embodiment, the second layer 22 may be formed on the first layer 21 with a uniform thickness.

In one embodiment, the water electrolysis electrode 100 may not include a binder. In an exemplary embodiment, the binder may refer to a conventional binder used in the art, such as a polymeric binder such as Nafion, polyvinylidene fluoride, polyacrylonitrile, carboxymethylcellulose, or a rubber binder, for example. Thus, in one embodiment, the water electrolysis electrode 100 may not include a polymeric binder such as Nafion, polyvinylidene fluoride, polyacrylonitrile, carboxymethylcellulose, or a rubber binder.

The problem with employing such binders is that they may degrade or cause side reactions during electrolysis, specifically, oxygen generating reactions, which may reduce the activity or durability of the electrolysis electrode 100. Further, the presence of binders can be a factor in reducing the electrolytic performance.

Furthermore, among the binders exemplified above, Nafion is one of the binders commonly used in the art, but Nafion is a representative PFAS (per- and polyfluoroalkyl substances) substance, and may cause environmental issues.

The water electrolysis electrode 100 according to one embodiment of the present disclosure can overcome the above-mentioned problems by not including a binder, specifically a binder as specified above, while at the same time still exhibiting acceptable, preferably improved, properties, e.g., regarding activity or durability of the electrolysis electrode, and/or electrolytic performance. Further, by depositing the catalyst layer 20 directly on the metal layer 10 without a binder, the electrical conductivity and durability can be greatly improved due to the chemical bonds that can be formed between the metal layer 10 and the catalyst layer 20.

In one embodiment, the water electrolysis electrode 100 may include iridium and ruthenium in a weight ratio of 9:1 to 5:5. In a specific embodiment, the water electrolysis electrode 100 may include iridium and ruthenium in a weight ratio of 8:2 to 5:5. In a more specific embodiment, the water electrolysis electrode 100 may comprise the iridium and ruthenium in a ratio of 7:3 to 5:5. In an exemplary embodiment, the weight ratio may be 7:3, 6.5:3.5, 6:4, 5.5:4.5, or 5:5.

When the iridium is included in the water electrolysis electrode 100 in an amount exceeding the numerical range of the weight ratio described above, it may be difficult to expect the effect of enhancing the activity of the oxygen generating reaction due to the interaction of iridium and ruthenium, and when the iridium is included in the water electrolysis electrode 100 in a less the numerical range of the weight ratio described above, in particular, when an excessive amount of ruthenium is included relative to iridium, the durability of the water electrolysis electrode 100 may be impaired due to the relatively weak durability of the ruthenium catalytic, such as excessive dissolution of the catalyst layer 20 during a long-term reaction.

In one embodiment, the iridium may comprise 0.3 wt% to 0.5 wt% based on of the total weight of the water electrolysis electrode 100. Alternatively, in a specific embodiment, the iridium content may be 0.31 wt% or more, 0.33 wt% or more, 0.35 wt% or more, 0.37 wt% or more, 0.38 wt% or more, 0.4 wt% or more, or 0.41 wt% or more, or 0.49 wt% or less, 0.48 wt% or less, 0.47 wt% or less, or 0.46 wt% or less. In other words, in the water electrolysis electrode 100, the iridium may be between 0.3 wt% to 0.5 wt%, and in specific embodiments, it may be 0.31 wt% or more, 0.33 wt% or more, 0.35 wt% or more, 0.37 wt% or more, 0.38 wt% or more, 0.4 wt% or more, or 0.41 wt% or more, or 0.49 wt% or less, 0.48 wt% or less, 0.47 wt% or less, or 0.46 wt% or less, based on the total weight of the water electrolysis electrode 100.

In one embodiment, the ruthenium may include 0.05 wt% to 0.5 wt% based on the total weight of the water electrolysis electrode 100. Alternatively, in specific embodiments, the content of the ruthenium may be 0.06 wt% or more, 0.07 wt% or more, 0.08 wt% or more, or 0.09 wt% or more, or 0.49 wt% or less, 0.45 wt% or less, 0.43 wt% or less, 0.4 wt% or less, 0.38 wt% or less, 0.35 wt% or less, 0.3 wt% or less, 0.28 wt% or less, 0.25 wt% or less, 0.24 wt% or less, 0.23 wt% or less, 0.22 wt% or less, 0.21 wt% or less, 0.2 wt% or less, 0.19 wt% or less, 0.18 wt% or less, 0.16 wt% or less, 0.15 wt% or less, 0.14 wt% or less, or 0.13 wt% or less. In other words, in the water electrolysis electrode 100, the ruthenium may be 0.05 wt% to 0.5 wt% based on the total weight of the water electrolysis electrode 100, and in specific embodiments, it may be 0.06 wt% or more, 0.07 wt% or more, 0.08 wt% or more, or 0.09 wt% or more, or 0.49 wt% or less, 0.45 wt% or less, 0.43 wt% or less, 0.4 wt% or less, 0.38 wt% or less, 0.35 wt% or less, 0.3 wt% or less, 0.28 wt% or less, 0.25 wt% or less, 0.24 wt% or less, 0.23 wt% or less, 0.22 wt% or less, 0.21 wt% or less, 0.2 wt% or less, 0.19 wt% or less, 0.18 wt% or less, 0.16 wt% or less, 0.15 wt% or less, 0.14 wt% or less, or 0.13 wt% or less.

The water electrolysis electrode 100 according to one embodiment of the present disclosure can exhibit equivalent or even superior oxygen generating performance compared to conventional noble metal catalyst electrodes with only a small amount of metal loading compared to conventional noble metal catalyst electrodes.

### Method for Manufacturing Water Electrolysis Electrode

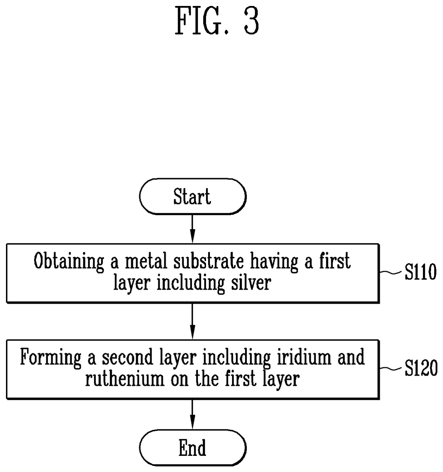

FIG. 3 is a flowchart illustrating an example method of manufacturing a water electrolysis electrode according to one embodiment of the present disclosure.

Referring to FIG. 3, a method for manufacturing a water electrolysis electrode according to one embodiment of the present disclosure may include a step of forming a catalyst layer on a metal substrate, wherein the catalyst layer may include silver, iridium, and ruthenium.

In one embodiment, the metal substrate and catalyst layer may be of the same composition as the metal layer 10 and catalyst layer 20 described with reference to FIGS. 1 and 2. The metal substrate and the metal layer are both referred to with the same reference number (10). In general, in the present disclosure, if in connection with a method for manufacturing water electrolysis electrode, reference is made to "metal substrate", and if in connection with a water electrolysis electrode or water electrolysis device, reference is made to "metal layer". However, the expressions "metal substrate" and "metal layer" have synonymous meaning herein.

In one embodiment, the metal substrate may include one or more selected from the group consisting of a metallic mesh, a metallic foam, a metallic foil, a metallic felt, and a metallic fiber.

In one embodiment, the metal substrate may include one or more selected from the group consisting of titanium, nickel, and stainless steel, or an alloy thereof.

In one embodiment, the metal substrate may include a titanium mesh or titanium felt. In a specific embodiment, the metal substrate may include a titanium felt. However, as desired, the metal substrate may include a titanium mesh or titanium felt, or may non-limitingly include other configurations without including a titanium mesh or titanium felt.

Referring to FIG. 3, in one embodiment, the step of forming a catalyst layer on the metal substrate may include a step of contacting the metal substrate with a first precursor solution containing silver ions and obtaining a metal substrate having a first layer including silver (S110), and a step of contacting the metal substrate with a second precursor solution containing iridium ions and ruthenium ions and forming a second layer including iridium and ruthenium on the first layer (S120).

In one embodiment, the step S110 may include contacting the metal substrate 10 with a first precursor solution containing silver ions and obtaining a metal substrate in which a first layer including silver is formed.

In one embodiment, the first precursor solution containing silver ions may include a silver precursor. In a specific embodiment, the silver precursor may include a silver salt.

In one embodiment, the first precursor solution may include one or more, or a mixture of one or more, selected from the group consisting of silver nitrate, silver acetate, silver sulfate, silver perchlorate, silver acetylacetonate, and silver methanesulfonate. Although not necessarily limited thereto, the first precursor solution may also be silver nitrate.

In an exemplary embodiment, the solvent of the first precursor solution may be water, an a C1 to C6 aliphatic alcohol, or a mixture thereof. In a specific embodiment, the solvent may be a mixture of water and C1 to C6 aliphatic alcohols. In a more specific embodiment, the solvent may be a mixture of water and ethanol. In such embodiments, the mixing ratio of the mixture of water and aliphatic alcohol may be, but is not necessarily limited to, 2:8, 3:7, 4:6, 5:5, 6:4, 7:3, 8:2 by volume, and in one embodiment, the mixing ratio may be 5:5.

In an exemplary embodiment, the concentration of the silver precursor in the first precursor solution may be from 1 mM to 1 M. In a specific embodiment, the concentration may be 10 mM or more, 30 mM or more, 50 mM or more, 60 mM or more, 70 mM or more, 80 mM or more, or 90 mM or more, or 900 mM or less, 800 mM or less, 700 mM or less, 600 mM or less, 500 mM or less, 450 mM or less, 400 mM or less, 350 mM or less, 300 mM or less, 250 mM or less, 200 mM or less, 150 mM or less, or 120 mM or less.

In one embodiment, the step S110 may include contacting the metal substrate 10 with the first precursor solution as described above. In a specific embodiment, the step S110 may be accomplished by drop casting.

In accordance with the above embodiments, silver with high ionization energy can be uniformly coated on the metal substrate.

In one embodiment, a metal substrate on which the first layer is formed by the step S110 can be obtained. Here, the first layer may be the same as the first layer 21 described with reference to FIGS. 1 and 2.

Accordingly, in accordance with the above embodiments, a first layer including silver may be formed on the metal layer with a uniform thickness as described above.

In one embodiment, the step S110 of obtaining the metal substrate on which the first layer is formed may further include contacting the metal substrate with the first precursor solution and then drying the metal substrate. In a specific embodiment, after contacting the metal substrate with the first precursor solution, a step of taking out the metal substrate and drying it may be further included.

In one embodiment, the drying may be performed at 60°C to 100°C, and in a specific embodiment, the drying may be performed at 65°C or higher, 70°C or higher, or 75°C or higher, or at 95°C or lower, 90°C or lower, or 80°C or lower.

In an exemplary embodiment, after drying as above, the metal substrate can be contacted again with the first precursor solution. In an exemplary embodiment, the above process may be repeated from two to five times.

Thus, in accordance with the above embodiments, a first layer including silver may be formed with a more uniform thickness on the metal layer as described above.

In one embodiment, the step S110 of obtaining the metal substrate on which the first layer is formed may further include a step of heat-treating the metal substrate having the first layer.

In one embodiment, the step of heat-treating may be performed in a hydrogen atmosphere.

In an exemplary embodiment, the step of heat-treating may be performed at 100°C to 900°C for 10 minutes to 600 minutes. In an exemplary embodiment, the temperature may be 150°C or more, 200°C or more, 250°C or more, 300°C or more, 350°C or more, or 380°C or more, or 850°C or less, 800°C or less, 750°C or less, 700°C or less, 650°C or less, 600°C or less, 550°C or less, 500°C or less, 450°C or less, or 420°C or less. In exemplary embodiments, the time may be 30 minutes or more, 40 minutes or more, 50 minutes or more, 550 minutes or less, 500 minutes or less, 450 minutes or less, 400 minutes or less, 350 minutes or less, 300 minutes or less, 250 minutes or less, 200 minutes or less, 150 minutes or less, 100 minutes or less, or 80 minutes or less.

Accordingly, in accordance with the above embodiments, the silver included in the first layer formed on the metal substrate may have a stable metallic phase, and impurities on the metal substrate may be removed.

In one embodiment, in step S120, the metal substrate 10 on which the first layer 21 is formed may be contacted with a second precursor solution containing iridium ions and ruthenium ions to form a second layer including iridium and ruthenium on the first layer 21.

In one embodiment, the second precursor solution containing iridium ions and ruthenium ions may comprise an iridium precursor and a ruthenium precursor. In a specific embodiment, the iridium precursor may comprise an iridium salt and the ruthenium precursor may comprise a ruthenium salt.

In one embodiment, the iridium precursor is selected from the group consisting of iridium chloride, iridium chloride hydrate, iridium bromide, iridium acetylacetonate, hexachloroiridic acid, sodium hexachloroiridate, and potassium hexachloroiridate, and may include one or more or mixtures thereof selected from the group consisting of sodium hexachloroiridate and potassium hexachloroiridate. Although not necessarily limited thereto, the iridium precursor may also be iridium chloride.

In one embodiment, the ruthenium precursor may comprise one or more, or a mixture thereof, selected from the group consisting of ruthenium chloride, ruthenium chloride hydrate, ruthenium bromide, ruthenium acetylacetonate, and hexachlororuthenate. Although not necessarily limited thereto, the ruthenium precursor may also be ruthenium chloride.

In an exemplary embodiment, the second precursor solution may be water, an aliphatic alcohol of C1 to C6, or a mixture thereof, as a solvent. In a specific embodiment, the solvent may be a mixture of water and aliphatic alcohols of C1 to C6. In a more specific embodiment, the solvent may be a mixture of water and ethanol. In such embodiments, the mixing ratio of the mixture of water and aliphatic alcohol may be, but is not necessarily limited to, 2:8, 3:7, 4:6, 5:5, 6:4, 7:3, 8:2 by volume, and in one embodiment, the mixing ratio may be 5:5.

In exemplary embodiments, the concentration of the iridium precursor in the second precursor solution may be from 1 mM to 10 mM, and in specific embodiments, the concentration may be 2 mM or more, 3 mM or more, 4 mM or more, 4.3 mM or more, or 4.7 mM or more, or 9 mM or less, 8 mM or less, 7 mM or less, 6 mM or less, 6 mM or less, 5.7 mM or less, 5.5 mM or less, or 5.2 mM or less.

In exemplary embodiments, the concentration of the ruthenium precursor in the second precursor solution may be 1 mM to 10 mM, and in specific embodiments, the concentration may be 1.1 mM or more, 1.3 mM or more, 1.5 mM or more, 1.7 mM or more, 1.8 mM or more, 1.9 mM or more, or 2 mM or more, or 9 mM or less, 8 mM or less, 7 mM or less, 6 mM or less, 5 mM or less, 4 mM or less, 3.5 mM or less, 3 mM or less, 2.7 mM or less, or 2.6 mM or less.

In one embodiment, the second precursor solution may comprise iridium ions and ruthenium ions in a molarity ratio of 9:1 to 5:5. In a specific embodiment, the second precursor solution may comprise the iridium ions and ruthenium ions in a molar ratio of 8:2 to 5:5, or more specifically, in a molar ratio of 7:3 to 5:5.

In such embodiments, the iridium precursor and ruthenium precursor may comprise iridium salts and ruthenium salts, respectively, as described above. Accordingly, the iridium ions and ruthenium ions included in the second precursor solution may be configured to be included in the molarity ratios described above.

In an exemplary embodiment, the molarity ratio may be 7:3, or 6.5:3.5, or 6:4, or 5.5:4.5, or 5:5.

In such embodiments, a water electrolysis electrode 100 can be prepared that satisfies the loading ratios of iridium and ruthenium included in the second layer 22 of as described above with reference to FIGS. 1 and 2.

In one embodiment, the step S120 may contact the metal substrate 10 on which the first layer 21 including silver obtained in the step S110 is formed with the second precursor solution. In a specific embodiment, the step S120 may be performed by drop casting.

In accordance with the above embodiments, iridium and ruthenium can be uniformly coated on the first layer.

In one embodiment, a metal substrate in which the first layer and the second layer are formed one after the other by the step S120 is obtained. Here, the first layer and second layer may be the same as the first layer 21 and second layer 22 described with reference to FIGS. 1 and 2.

Thus, in accordance with the above embodiments, a second layer including iridium and ruthenium may be formed with a uniform thickness on the metal layer as described above.

In one embodiment, the step S120 of forming the second layer may further include contacting the metal substrate with the second precursor solution and then drying it. In a specific embodiment, the step of contacting the metal substrate with the second precursor solution may further include the step of taking out the metal substrate and drying it.

In one embodiment, the drying may be performed at 60°C to 100°C, and in a specific embodiment, the drying may be performed at 65°C or higher, 70°C or higher, or 75°C or higher, or at 95°C or lower, 90°C or lower, or 80°C or lower.

In an exemplary embodiment, after drying as described above, the metal substrate may again be contacted with the second precursor solution. In an exemplary embodiment, the above process may be repeated from two to five times.

Thus, in accordance with the above embodiments, a second layer including iridium and ruthenium may be formed on the first layer with a more uniform thickness as described above.

In one embodiment, the step S120 of forming the second layer may further include the step of heat-treating the metal substrate having the second layer.

In one embodiment, the step of heat-treating may be performed in a hydrogen atmosphere.

In an exemplary embodiment, the step of heat-treating may be performed at 100°C to 900°C for 10 minutes to 600 minutes. In an exemplary embodiment, the temperature may be 150°C or more, 200°C or more, 250°C or more, 300°C or more, 350°C or more, or 380°C or more, or 850°C or less, 800°C or less, 750°C or less, 700°C or less, 650°C or less, 600°C or less, 550°C or less, 500°C or less, 450°C or less, or 420°C or less. In exemplary embodiments, the duration may be 30 minutes or more, 40 minutes or more, or 50 minutes or more, or 550 minutes or less, 500 minutes or less, 450 minutes or less, 400 minutes or less, 350 minutes or less, 300 minutes or less, 250 minutes or less, 200 minutes or less, 150 minutes or less, 100 minutes or less, or 80 minutes or less.

Thus, in accordance with the above embodiments, the iridium and ruthenium included in the second layer formed on the first layer may have a stable metal phase, and the foreign matter on the first layer may be removed.

In one embodiment, the step of forming the catalyst layer on the metal substrate may further include: acidizing the metal substrate, before the step of forming the catalyst layer on the metal substrate.

Referring to FIG. 3, the step of acidizing may be performed before the step S110. In an exemplary embodiment, the acidizing step may be prepared by contacting the metal substrate with an acidic solution followed by drying.

In an exemplary embodiment, the acidic solution may be nitric acid, sulfuric acid, hydrochloric acid, acetic acid, citric acid, oxalic acid, or mixtures thereof. In another embodiment, the metal substrate can be contacted with the acidic solution for 12 hours to 36 hours. Specifically, the metal substrate may be immersed in the acidic solution, or the acidic solution may be sprayed onto the metal substrate, or the like.

In the above embodiment, a water electrolysis electrode 100 may be manufactured in which a first layer 21 and a second layer 22 are formed one after the other on the metal layer 10 as shown in FIG. 2. In this way, by adopting a two-step of first forming the first layer 21 and then forming the second layer 22 on the metal layer 10, the oxidation of the metal of the metal substrate during the water electrolysis reaction can be minimized.

### Water electrolysis apparatus

A water electrolysis device (also referred to herein as water electrolysis apparatus) according to one embodiment of the present disclosure may include: an anode; a cathode; and a membrane positioned between the anode and the cathode, wherein the anode includes a metal layer and a catalyst layer formed on the metal layer, the catalyst layer may include silver, iridium, and ruthenium.

In one embodiment, a water electrolysis electrode as described above with reference to FIGS. 1 to 5 may be used as an anode in a water electrolysis device according to one embodiment of the present disclosure.

In one embodiment, the water electrolysis device may include an electrolyte that immerses or at least contacts the anode and cathode and is an aqueous or non-aqueous medium in which ions can migrate.

In one embodiment, the membrane may function as a separator, i.e., the membrane may be positioned between the anode and cathode, thereby separating the anode and cathode.

In an exemplary embodiment, the membrane may function as an ion exchange membrane, for example, cation exchange membrane or anion exchange membrane. In exemplary embodiments, the membrane may be a porous polymeric membrane, a porous ceramic membrane, or the like.

In one embodiment, the cathode may be made of a conductive metal substrate, as is the case with the anode or any water electrolysis electrode according to one embodiment of the present disclosure. The conductive substrate of the cathode may also be loaded with a cathode catalyst. In an exemplary embodiment, the cathode catalyst may include, without limitation, platinum, ruthenium, iridium, osmium, palladium, platinum-ruthenium alloys, platinum-osmium alloys, platinum-palladium alloys and oxides thereof, or other carbon-based catalysts, in order to be conductive without side reactions with the electrolyte and at the same time exhibit low overpotential in the hydrogen generation reaction.

In exemplary embodiment, the electrolyte may be an acidic electrolyte. Although not necessarily limited thereto, examples of such electrolytes include sulfuric acid, hydrochloric acid, nitric acid, and the like. Although not necessarily limited thereto, the electrolyte may have a pH of 6 or less, 5 or less, 4 or less, or 3.5 or less.

The water electrolysis device according to one embodiment may be preferably used in, for example, a redox flow cell or other fuel cell, but is not necessarily limited to these.

In the following, embodiments of the present disclosure will be further described with reference to specific experimental examples. The embodiments and comparative examples included in the experimental examples are illustrative of the present disclosure and are not intended to limit the scope of the appended patent claims, and it will be apparent to those skilled in the art that various changes and modifications to the embodiments are possible within the scope of the present disclosure, and that such changes and modifications fall within the scope of the appended patent claims.

### Manufacturing Examples

### Example 1 - Preparation of IrRu-Ag/Ti electrode

A first precursor solution at 100 mM was prepared by adding silver nitrate (Sigma) to a mixed solution of distilled water/ethanol in a volume ratio 1:1, followed by sonication and stirring until the silver precursor was completely dissolved.

The first precursor solution was drop-cast onto the titanium felt acid-treated with 10 wt% oxalic acid, and dried on an 80°C hotplate, and the process was repeated three times. Subsequently, silver-coated Ag/Ti electrode was prepared by heat treatment at 400°C for 1 hour under H₂ conditions.

Furthermore, iridium chloride hydrate (Sigma) and ruthenium chloride hydrate (Sigma) were added to a mixed solution of distilled water/ethanol in a volume ratio 1:1, and a second precursor solution with 5 mM iridium precursor and 2.2 mM ruthenium precursor was prepared by sonication and stirring until the iridium precursor and ruthenium precursor were completely dissolved.

The second precursor solution thus prepared was drop-cast onto the Ag/Ti electrode, and dried on an 80°C hotplate, and the process was repeated four times. Subsequently, the Ag/Ti electrode was heat treated at 400°C for 1 hour under H₂ condition to finally prepare IrRu-Ag/Ti electrode coated with silver, iridium and ruthenium.

### Example 2 - Preparation of IrRu-Ag/Ti electrode

In the method of preparation of Example 1, a second precursor solution was prepared and used so that the iridium precursor was 5 mM and the ruthenium precursor was 5 mM, and the IrRu-Ag/Ti electrode was prepared by performing the same procedure as in Example 1, except that the second precursor solution was prepared and used so that the ruthenium precursor was 5 mM.

### Comparative Example 1 - Preparation of Ir-Ag/Ti electrode

Ir-Ag/Ti electrode was prepared by performing the same procedure as in Example 1, except that as the second precursor solution, a second precursor solution with 6.7 mM of iridium precursor prepared by adding only iridium chloride hydrate to a mixed solution of distilled water/ethanol in volume ratio 1:1, followed by sonication and stirring until the iridium precursor was completely dissolved was used.

### Comparative Example 2 - Preparation of Ir/Ti Electrode

Ir/Ti electrode was prepared by performing the same procedure as in Comparative Example 1, except that the process of contacting the titanium felt with the first precursor solution was not performed.

### Comparative Example 3 - Preparation of Ag/Ti electrode

Ag/Ti electrode was prepared by performing the same procedure as in Example 1, except that the process of contacting the titanium felt with the second precursor solution was not performed.

### Comparative Example 4 - Preparation of IrO₂ electrode

A commercial oxide catalyst, IrO₂ black (100% by weight, Alfa Aesar) was prepared.

### Evaluation examples

### Evaluation Example 1 - Evaluation of electrode properties

### (1) Scanning Electron Microscope (SEM) / Energy Dispersive Spectrometer (EDS) Mapping Analysis

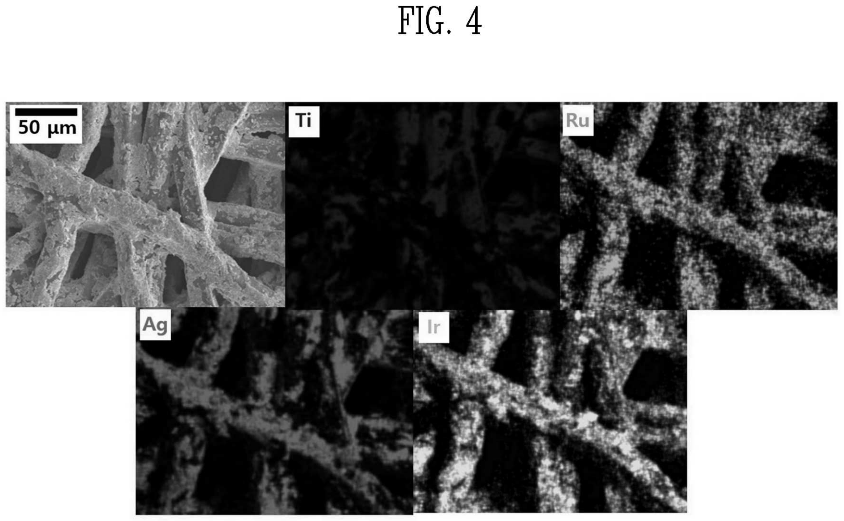

FIG. 4 is a SEM/EDS mapping image of the electrode of Example 1.

Using a scanning electron microscope equipped with an EDS detector, an EDS mapping image of the example electrode was acquired and is shown in FIG. 4. The measurement conditions included an acceleration voltage of 15 kV and a magnification of x500.

Referring to FIG. 4, the analysis confirms that silver, iridium, and ruthenium are simultaneously present on the electrode of Example 1, and that the silver, iridium, and ruthenium are uniformly deposited throughout the titanium felt.

### (2) X-ray diffraction (XRD) analysis

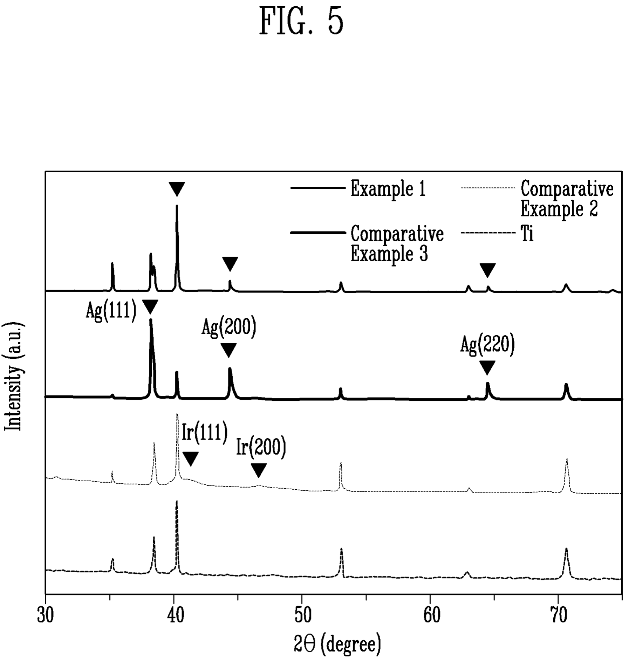

FIG. 5 is a graph showing XRD patterns of the Example 1, Comparative Examples 2 and 3.

For the electrodes of Example 1, Comparative Examples 2 and 3, the metal crystal planes were identified using an X-ray diffractometer (PANalytical). The measurements were made at 40 kV and 100 mA using Cu Kα rays, with a scan rate of 6° per minute at intervals of 0.01° over a range of 10° to 80°. The measured patterns are shown in FIG. 5. For further comparison, in addition to the electrodes of Examples 1, Comparative Examples 2 and 3, a conventional titanium electrode was also measured.

Referring to FIG. 5, an iridium peak was observed in the pattern of the electrode of Comparative Example 2 and a silver peak was observed in the pattern of the electrode of Comparative Example 3. On the other hand, only a peak for silver was identified on the electrode of Example 1, while peaks for iridium and ruthenium were not observed. Taken together with the analysis results in (1) of Example 1 above, it was confirmed that it is difficult to identify iridium and ruthenium peaks because iridium and ruthenium are very evenly distributed at 10 nm or below.

### (3) X-ray photoelectron spectroscopy (XPS) analysis

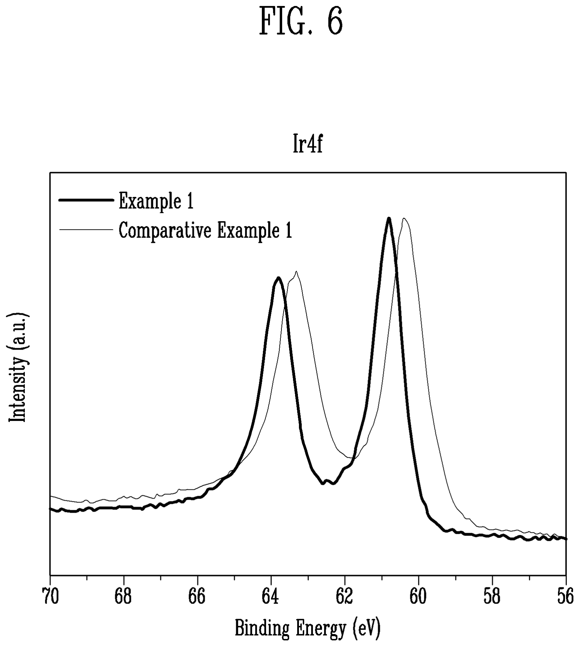

FIG. 6 is a graph showing the XPS analysis results of the Example 1 and Comparative Example 1.

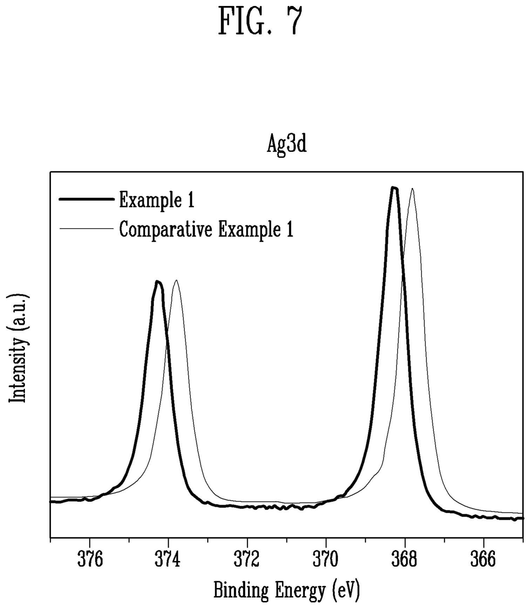

FIG. 7 is a graph showing the XPS analysis results of the Example 1 and Comparative Example 1.

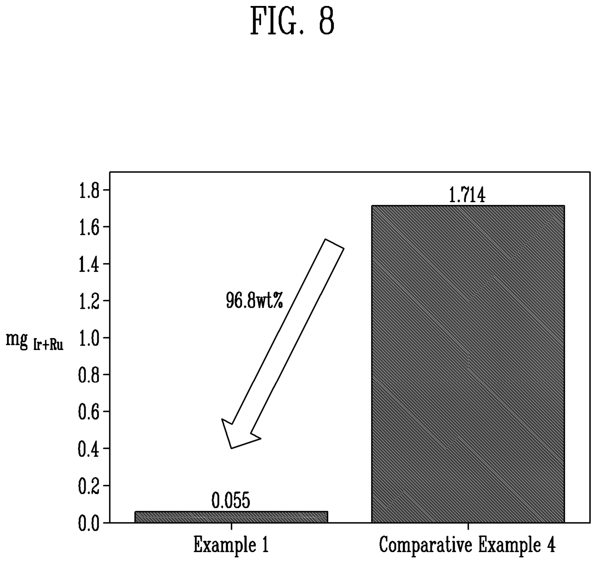

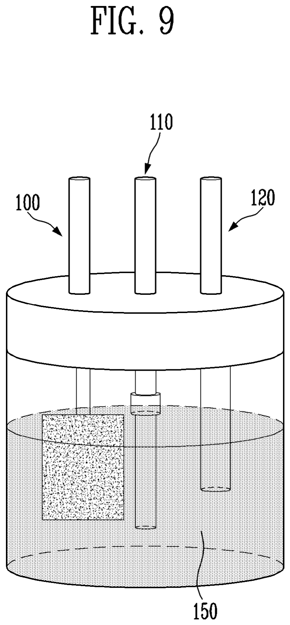

The electrodes of Example 1 and Comparative Example 1 were analyzed by X-ray photoelectron spectroscopy (XPS, Escalab 250Xi, Thermo Fisher Scientific) to determine the electronic structure of the metal on the electrode surface, and the results are shown in FIGS. 8 and 9.

Referring to FIGS. 8 and 9, it was confirmed that iridium was supported on the electrode of Example 1, and in particular, in the case of the electrode of Example 1, a shift of the iridium main peak and the silver main peak could be observed compared to the electrode of Comparative Example 1, confirming the presence of additional ruthenium in the catalyst layer in addition to silver and iridium, and further confirming that the electronic structure of iridium and silver was changed by interaction with ruthenium.

### (4) Elemental content analysis

FIG. 8 is a graph comparing the supporting amount of iridium and ruthenium in the catalyst layer of the Example 1 and Comparative Example 4 by ICP mass spectrometry.

Inductively coupled plasma mass spectroscopy (ICP-MS) was used to analyze the content of metal elements present in the catalyst layer of the water electrolysis electrodes prepared in Example 1 and Comparative Example 4. Inductively coupled plasma atomic emission spectroscopy (ICP-AES, PerkinElmer 350S) was used to analyze the content of metal elements present in the catalyst layer of each electrode for the electrodes of Example 1 and Comparative Example 4, and is shown in FIG. 8.

Referring to FIG. 8, it can be seen that the sum of the content of iridium and ruthenium in the catalyst layer of the electrode of Example 1 is 0.055 mg/cm², which is a significantly lower loading of precious metals compared to the electrode of Comparative Example 4, which has an iridium content of 1.7 mg/cm². It can be seen that despite the significantly lower precious metal loading, the electrode of Example 1 can have rather good oxygen generating reaction activity compared to the electrode of Comparative Example 4, as will be described later.

### Evaluation Example 2 - Electrochemical Characterization of Electrodes

FIG. 9 is a diagram illustrating an example of a three-electrode system configured for evaluating electrochemical properties.

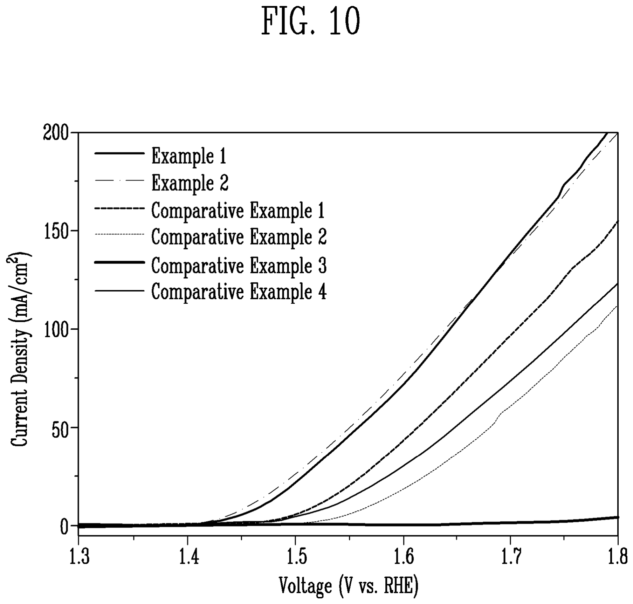

FIG. 10 is a graph showing a current density vs. voltage curve evaluating the oxygen generating performance of each of the electrodes of Examples 1 and 2 and Comparative Examples 1 to 4.

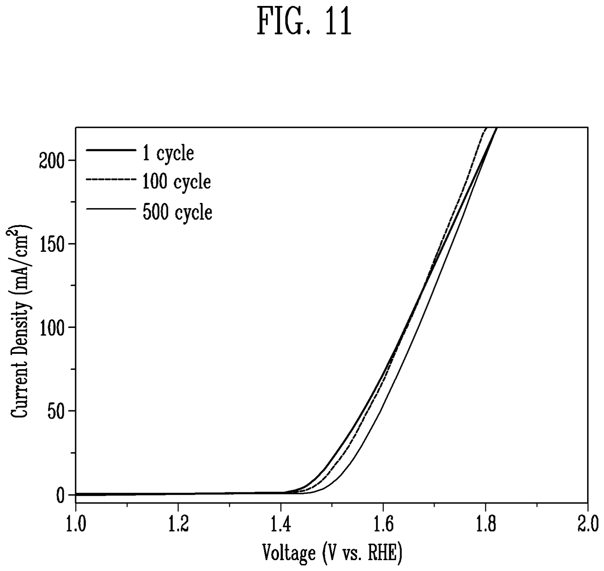

FIG. 11 is a graph showing a current density vs. voltage curve evaluating the oxygen generating performance of the Example 1 on a cycle-by-cycle.

Each of the electrodes prepared in the Examples and Comparative Examples was used as a working electrode 100, Ag/AgCl (sat. 3M KCI) as a reference electrode 110, and a graphite rod as a counter electrode 120 to form a three-electrode system as shown in FIG. 9. Each electrode was immersed in 0.5 M of H₂SO₄ acidic solution 150.

The performance of the oxygen generating reaction was evaluated using each of the three-electrode systems with the electrodes prepared in the Examples and Comparative Examples as the working electrodes. Each three-electrode system was evaluated by measuring the polarization of the oxygen generating reaction at a scan rate of 10 mV/s under room temperature conditions. All measurements are expressed as "vs reversible hydrogen electrode (RHE)", and the results are shown in FIG. 10 and Table 1 below.

**[Table 1]**

| | Overpotential |
|---|---|
| | (V vs RHE; reference of current density: 10 mA/cm²) |
| Example 1 | 0.237 |
| Example 2 | 0.228 |
| Comparative Example 1 | 0.287 |
| Comparative Example 2 | 0.340 |
| Comparative Example 3 | 0.641 |
| Comparative Example 4 | 0.302 |

Referring to FIG. 10 and Table 1, when comparing the performance of the oxygen generating reaction at a current density of 10 mA/cm², it can be seen that the electrodes of Example 2, Example 1, Comparative Example 1, Comparative Example 4, Comparative Example 2, and Comparative Example 3 have superior activity in that order.

Specifically, the electrodes of Example 1 and Example 2 required an overpotential of only 0.237 V and 0.228 V, respectively, to obtain a current density value corresponding to 10 mA/cm², which corresponds to a significantly smaller value than that of Comparative Example 4 and Comparative Example 2, and in particular, the overpotential was significantly reduced compared to Comparative Example 1 without ruthenium loading.

As shown in Evaluation Example 1, it can be seen that despite having a significantly lower catalyst metal loading compared to Comparative Example 4, the electrodes of Examples have superior oxygen generating performance compared to Comparative Example 4.

This is believed to be due to the fact that, in the electrodes prepared according to one embodiment of the present disclosure, the uniform deposition of silver, iridium, and further ruthenium on the metal substrate (titanium mesh) may result in improved oxygen generating performance due to the effective interaction of these elements, which may change the electronic structure of iridium acting as a reaction active point, and furthermore, the high electrical conductivity and acid resistance properties of silver and the increased electrochemical activity due to the introduction of additional ruthenium also contribute to the improved activity.

Furthermore, the oxygen generating performance of the electrode of Example 1 was evaluated by cycle (1 cycle, 100 cycles, and 500 cycles) while performing 500 cycles of oxygen generating reaction using the three-electrode system as described above, and is shown in FIG. 11.

Referring to FIG. 11, the stability evaluation showed that there was no change in overpotential at 200 mA/cm² even after 500 cycles. This confirms that the long-term response stability of the electrode according to one embodiment of the present disclosure is excellent.

The description of the present disclosure is for illustrative purposes only, and a person skilled in the art to which the present disclosure pertains will understand that the present disclosure may be easily modified into other specific forms without changing the technical idea or essential features of the present disclosure. Therefore, it should be understood that the embodiments described above are exemplary in all respects and not limiting. For example, each component described as a single entity may be implemented in a distributed manner, and likewise, components described as distributed may be implemented in a combined manner.

The scope of the present disclosure is indicated by the appended claims rather than the detailed description above, and all changes or modifications derived from the meaning and scope of the claims and their equivalent concepts should be construed as being in the scope of the present disclosure.

## Claims

1. A water electrolysis electrode (100) comprising:
a metal layer (10); and
a catalyst layer (20) formed on the metal layer (10),
wherein the catalyst layer (20) includes silver, iridium and ruthenium.

2. The water electrolysis electrode (100) according to claim 1, wherein the metal layer (10) includes (a) one or more selected from the group consisting of a metal mesh, a metal foam, a metal foil, a metal felt, and a metal fiber, and/or (b) one or more metal selected from the group consisting of titanium, nickel, and stainless steel, or an alloy thereof, preferably a titanium felt.

3. The water electrolysis electrode (100) according to claims 1 or 2, wherein at least some of the silver, iridium and ruthenium included in the catalyst layer (20) electrically interact with each other.

4. The water electrolysis electrode (100) according to any one of claims 1 to 3, the catalyst layer (20) includes:
a first layer (21) including the silver and in contact with the metal layer (10); optionally wherein at least some of the silver included in the first layer (21) is chemically bonded with a metal of the metal layer (10); and
a second layer (22) including the iridium and ruthenium and being formed on the first layer (21).

5. The water electrolysis electrode (100) according to any one of claims 1 to 4, wherein the catalyst layer (20) does not include a binder, optionally wherein the catalyst layer (20) does not include one or more binder substance(s) selected from the group consisting of polymeric binder such as Nafion, polyvinylidene fluoride, polyacrylonitrile, carboxymethylcellulose, or a rubber binder; more specifically the catalyst layer (20) does not include polymeric binder, polyvinylidene fluoride, polyacrylonitrile, carboxymethylcellulose, and a rubber binder.

6. The water electrolysis electrode according to any one of claims 1 to 5, comprising: the iridium and ruthenium in a weight ratio of 9:1 to 5:5.

7. The water electrolysis electrode (100) according to any one of claims 1 to 6, (a) wherein the iridium is included in 0.3wt% to 0.5wt% based on the total weight of the water electrolysis electrode, and/or (b) wherein the ruthenium is included in 0.05wt% to 0.5wt% based on the total weight of the water electrolysis electrode.

8. A method for manufacturing a water electrolysis electrode (100), comprising:
a step of forming a catalyst layer (20) on a metal substrate;
wherein the catalyst layer (20) includes silver, iridium, and ruthenium.

9. The method according to claim 8, wherein the metal substrate includes (a) one or more selected from the group consisting of a metal mesh, a metal foam, a metal foil, a metal felt, and a metal fiber, and/or (b) one or more metal selected from the group consisting of titanium, nickel, and stainless steel, or an alloy thereof, preferably a titanium felt.

10. The method according to claims 8 or 9, wherein the step of forming the catalyst layer (20) on the metal substrate includes:
a step of contacting the metal substrate with a first precursor solution containing silver ions and obtaining a metal substrate having a first layer (21) including silver formed thereon, and
a step of contacting the metal substrate having the first layer (21) formed thereon with a second precursor solution containing iridium ions and ruthenium ions, optionally the second precursor solution contains iridium ions and ruthenium ions in a molarity ratio of 9:1 to 5:5, and forming a second layer (22) including iridium and ruthenium on the first layer (21).

11. The method according to claim 10, (a) wherein the step of obtaining the metal substrate having the first layer (21) includes a step of heat-treating the metal substrate having the first layer (21), and/or (b) wherein the step of forming the second layer (22) includes a step of heat-treating the metal substrate having the second layer (22).

12. The method according to any one of claims 8 to 11, further comprising:
a step of acid-treating the metal substrate before the step of forming the catalyst layer (20) on the metal substrate.

13. A water electrolysis device, comprising:
an anode;
a cathode; and
a membrane positioned between the anode and the cathode,
wherein the anode includes a metal layer (10) and a catalyst layer (20) formed on the metal layer (10), the catalyst layer (20) includes silver, iridium, and ruthenium.

14. Use of a water electrolysis electrode as defined in any of claims 1 to 7, or a water electrolysis device of claim 13, for water electrolysis.

15. Use of a water electrolysis electrode as defined in any of claims 1 to 7, wherein the water electrolysis electrode is included in a water electrolysis device.
